Europäisches Patentamt

European Patent Office

Office européen des brevets

(19)

(11) **EP 0 938 142 B1**

(12) **FASCICULE DE BREVET EUROPEEN**

(45) Date de publication et mention
de la délivrance du brevet:
**17.09.2003 Bulletin 2003/38**

(51) Int Cl.⁷: **H01L 41/04**

(21) Numéro de dépôt: **99810112.5**

(22) Date de dépôt: **10.02.1999**

(54) **Circuit d'alimentation d'un moteur piézo-électrique à onde progressive**

Schaltungsanordnung für einen piezoelektrischen Wanderwellenmotor

Power supply circuit for a piezoelectric travelling wave motor

(84) Etats contractants désignés:
**AT BE CH DE ES FR GB IT LI NL SE**

(30) Priorité: **20.02.1998 FR 9802070**

(43) Date de publication de la demande:
**25.08.1999 Bulletin 1999/34**

(73) Titulaire: **SOMFY**
**74300 Cluses (FR)**

(72) Inventeurs:
• **Grehant, Bernard Jean-Pierre**
**74300 Nancy sur Cluses (FR)**
• **Petit, Lionel**
**69300 Caluire (FR)**

• **Nogarede, Bertrand**
**31000 Toulouse (FR)**

(74) Mandataire: **Meylan, Robert Maurice et al**
**c/o BUGNION S.A.**
**10, route de Florissant**
**Case Postale 375**
**1211 Genève 12 - Champel (CH)**

(56) Documents cités:
**WO-A-95/34097          US-A- 4 658 172**

• **PATENT ABSTRACTS OF JAPAN vol. 012, no.**
**486 (E-695), 19 décembre 1988 & JP 63 202278 A**
**(NIKON CORP), 22 août 1988**

# Description

La présente invention a pour objet un circuit d'alimentation d'un moteur piézo-électrique à onde progressive comprenant au moins un rotor entraîné, par frottement, par au moins un stator excité par au moins deux éléments piézo-électriques reliés respectivement, d'une part, au stator et, d'autre part, à deux électrodes alimentées respectivement par deux tensions alternatives de même amplitude et déphasées d'environ 90° au moyen d'une source unique d'alimentation alternative et d'un moyen destiné à générer les deux tensions déphasées.

Un tel circuit d'alimentation est connu du brevet français 2 721 154. Dans ce document il est proposé, afin de remédier aux inconvénients des circuits d'alimentation antérieurs comprenant deux sources d'alimentation créées par des dispositifs d'alimentation indépendants, d'alimenter le moteur piézo-électrique au moyen d'une source unique alternative haute fréquence et d'un moyen d'adaptation connecté, d'une part, à la source d'alimentation alternative et, d'autre part, aux électrodes des éléments piézo-électriques pour générer les deux tensions déphasées d'environ 90°. Le moyen d'adaptation est constitué de deux quadripôles, l'un de ces quadripôles comprenant une inductance et une capacité et l'autre quadripôle une inductance. Si la source d'alimentation alternative comprend un transformateur dont les étages primaire et secondaire sont tous deux constitués de deux enroulements, les inductances des quadripôles peuvent être constitués par les propres inductances de fuite du transformateur. Il est toutefois nécessaire de maîtriser ces fuites en intercalant un entrefer de manière à augmenter l'inductance de fuite intrinsèque, ce qui nécessite la fabrication de transformateurs spéciaux présentant un rayonnement supérieur aux transformateurs standards, ce qui peut contraindre à prévoir un blindage de l'ensemble du circuit pour respecter les contraintes normatives. Une telle solution est donc relativement lourde et onéreuse.

La présente invention vise à réaliser un circuit d'alimentation aussi simple et léger que possible.

Le circuit d'alimentation selon l'invention est caractérisé en ce que le moyen destiné à générer les deux tensions déphasées est constitué d'un condensateur en série avec l'une desdites électrodes et dont la valeur est choisie de telle sorte que, pour une fréquence donnée de la tension de la source, l'amplitude de la tension entre le stator et l'électrode de l'élément piézo-électrique en série avec le condensateur soit sensiblement égale à l'amplitude de la tension de la source, et que le déphasage des courants dans chaque élément piézo-électrique soit voisin de 90°.

La génération de deux tensions d'amplitude sensiblement égales et déphasée sensiblement de 90° est donc obtenue par la simple mise en série d'un condensateur avec une des voies des moteurs, c'est-à-dire sans inductances additionnelles.

La valeur du condensateur doit bien entendu être adaptée à la valeur de l'impédance des éléments piézo-électriques et à la fréquence de la tension d'alimentation. Cette valeur peut sans autre être déterminée par l'homme de l'art de telle sorte que les deux tensions déphasées aient sensiblement la même amplitude et que les courants dans chaque voie du moteur soient sensiblement en quadrature de phase.

La source d'alimentation peut être, par exemple, pilotée par une ULT (Unité Logique de Traitement), la présence d'une telle ULT permettant en outre de déterminer l'état de mouvement du moteur et son évolution, en particulier sa vitesse et son couple.

Dans une première phase de fonctionnement du moteur, l'ULT peut être utilisée pour piloter la fréquence du travail du moteur. A cet effet, selon un mode d'exécution, la tension sur les deux phases du moteur, c'est-à-dire la tension de la source et la tension entre le stator et l'électrode de l'élément piézo-électrique reliée au condensateur, sont appliquées aux entrées de l'ULT qui est programmée de manière à ajuster la fréquence de la source de manière à ce que les amplitudes desdites tensions soient égales.

La source d'alimentation peut aussi être pilotée en fréquence en appliquant aux entrées de l'ULT la tension de la source et le courant total, l'ULT étant programmée de manière à ajuster la fréquence de la source de manière à ce que la tension et le courant soient sensiblement en phase. La tension de la source et le courant total peuvent être remplacés respectivement par les courants dans chacune des électrodes, l'ULT étant dans ce cas, programmée de manière à ajuster la fréquence de telle manière que lesdits courants soient sensiblement en quadrature de phase.

Au lieu d'une ULT il est possible d'utiliser une boucle à verrouillage de phase (PLL) agissant de telle sorte que la tension de la source et le courant total soient sensiblement en phase.

L'invention sera exposée plus en détail en relation au dessin annexé dans lequel :

la figure 1 représente le schéma général d'un moteur piézo-électrique et de son circuit d'alimentation;

la figure 2 représente le schéma équivalent d'une phase du moteur sans le condensateur additionnel;

la figure 3 représente le schéma équivalent simplifié;

la figure 4 représente le schéma équivalent du moteur représenté à la figure 1;

la figure 5 représente le diagramme vectoriel correspondant au schéma représenté à la figure 4;

la figure 6 représente à nouveau le schéma équivalent du moteur avec l'ULT de pilotage en fréquence, mais dans les cas où d'autres paramètres de fonctionnement du moteur sont appliqués aux entrées de l'ULT; et

la figure 7 représente le moteur piloté par une boucle à verrouillage de phase.

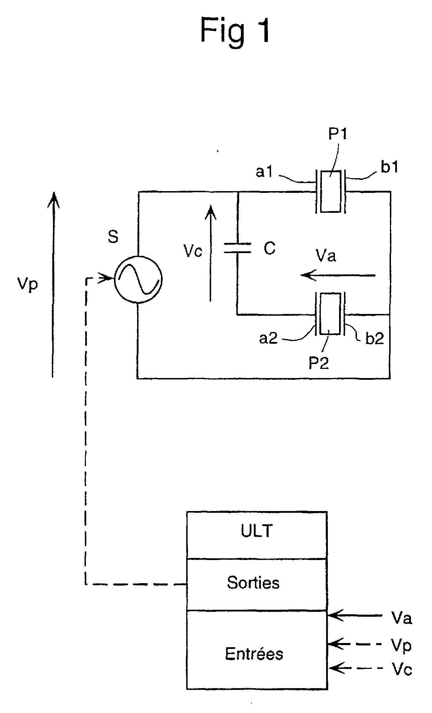

La figure 1 représente le schéma d'un moteur piézo-électrique comprenant deux éléments piézo-électriques P1 et P2 alimentés par une source de courant alternatif S. Dans le schéma représenté, chacun des éléments piézo-électrique est muni de deux électrodes a1, b1, respectivement a2, b2. Dans un moteur piézo-électrique tel que décrit dans la demande de brevet WO 91/08594 les électrodes b1 et b2 sont en fait constituées par le stator auquel sont reliés les éléments piézo-électriques, le stator étant relié à une des bornes de la source S. Pour simplifier, on a représenté seulement une paire d'éléments piézo-électriques, mais il est clair que cette paire pourrait être remplacée par deux jeux comportant chacun plusieurs éléments piézo-électriques, comme décrit dans le brevet susmentionné. L'électrode a1 de l'élément piézo-électrique P1 est reliée directement à l'autre borne de la source S, tandis que l'électrode a2 de l'autre élément piézo-électrique P2 est reliée à cette borne à travers un condensateur C.

A la figure 1 est également représentée une ULT (Unité Logique de Traitement) dont le rôle sera décrit plus loin.

Comme ceci sera exposé ci-après, le condensateur C permet, à lui seul, d'obtenir sur les deux voies constituées par les deux éléments piézo-électriques P1 et P2, deux tensions alternatives de même amplitude Vp et Va et deux courants déphasés d'environ 90°.

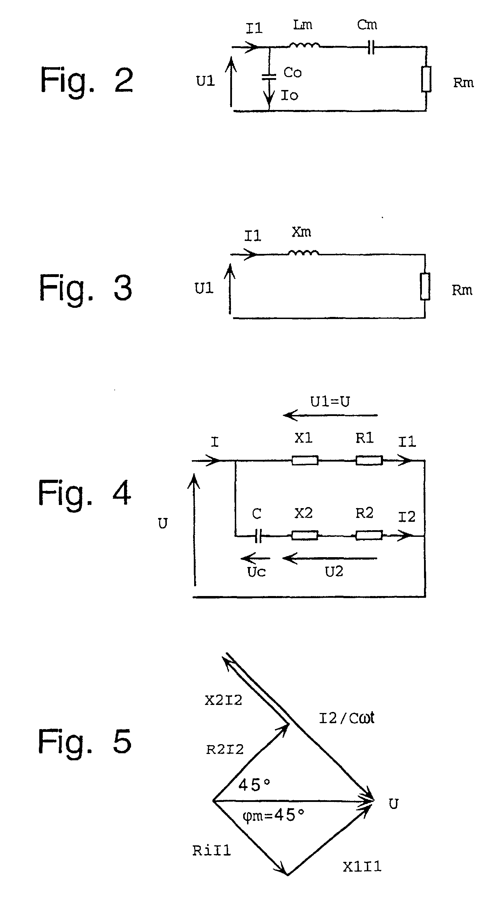

Ce résultat sera expliqué à l'aide des figures 2 à 5.

Le schéma équivalent d'une phase ou voie d'alimentation du moteur piézo-électrique selon la figure 1, sans le condensateur C, est représenté, pour mémoire, à la figure 2. Lm, Cm, Rm sont respectivement l'inductance, la capacité et la résistance de la "branche motionnelle" qui traduisent l'effet piézo-électrique et la résonance électromécanique pour une fréquence fo telle que

$$fo = \frac{1}{2\pi\sqrt{LmCm}}$$

Lm traduit la masse, Cm l'élasticité et Rm la conversion en puissance thermique et mécanique, c'est-à-dire la perte et la puissance utile.

Co est la "capacité bloquée" de la voie correspondant à la capacité formée par les électrodes a1, b1 séparées par une épaisseur de matériau isolant.

Lorsque la fréquence f est légèrement supérieure à fo, le comportement de la branche motionnelle est globalement inductif et U1 est donc en avance sur Im d'un angle $\varphi m$. Il existe une fréquence $f_T$ telle que $\varphi m = 45°$. Cette fréquence est la fréquence de travail pour laquelle

$$Rm = Lm\omega_T - \frac{1}{Cm\omega_T}$$

Pour la plupart des configurations de moteurs piézo-électriques

$$\frac{1}{Co\omega_T} \gg Rm \text{ et donc Io} \ll Im.$$

La capacité Co n'intervient donc pratiquement pas dans le schéma équivalent qui peut être simplifié comme représenté à la figure 3, où

$$Xm = Lm\ \omega_T - \frac{1}{Cm\omega_T}$$

En appliquant ce schéma équivalent simplifié au schéma du moteur représenté à la figure 1, on obtient le schéma représenté à la figure 4, dans lequel R1 = R2 et X1 = X2.

On désire, d'une part, que les courants I1 et I2 soient de même amplitude et déphasés de 90°, et, d'autre part, que le courant total I soit en phase avec la tension U, de telle sorte qu'il ne soit pas nécessaire d'ajouter des éléments de compensation de la puissance réactive.

Ces conditions correspondent au diagramme vectoriel représenté à la figure 5. Elles sont satisfaites si

$$\frac{1}{C\omega_T} = 2X \text{ et } R_{1,2} = X_{1,2}$$

Pour une valeur déterminée de Rm les conditions désirées ne sont donc remplies que pour une fréquence de travail déterminée. D'autre part, si la puissance mécanique varie, Rm varie et la condition R = X n'est plus satisfaite. Le diagramme de la figure 5 se déforme : les courants $I_1$ et $I_2$ ne sont plus en quadrature et les tensions $U_1$ et $U_2$ ne sont plus égales.

Il est dès lors possible, dans ce mode d'alimentation, à partir d'une source unique et d'un condensateur :

a) de rechercher, pour un point de fonctionnement donné, la fréquence de travail optimale $f_T$ telle que les tensions $U_1$ et $U_2$ soient égales en amplitude et donc sensiblement déphasées de 90°; et

b) de surveiller les écarts par rapport à ce point de fonctionnement à partir de l'analyse de la variation

des amplitudes de $U_1$ et $U_2$ ou de la variation du déphasage des tensions et/ou des courants.

C'est précisément le rôle de l'ULT de la figure 1.

Dans une première phase de fonctionnement l'ULT est utilisée pour piloter la fréquence de travail $f_T$ du moteur. A cet effet, selon un premier mode d'exécution, les tensions Vp et Va sont appliquées aux entrées de l'ULT qui est programmée de manière à ajuster la fréquence de la source S de manière à ce que les amplitudes des tensions Vp et Va soient égales.

Après cette phase d'ajustement, la fréquence n'est plus modifiée et l'ULT peut être utilisée pour déterminer l'état de mouvement du moteur et pour commander son arrêt et l'inversion de son sens de rotation.

L'inversion du sens de rotation se fait par l'inversion des tensions Va et Vp au moyen d'un jeu de commutateurs commandés par l'ULT.

Différentes procédures peuvent être appliquées par l'ULT.

L'amplitude de la tension Va peut être comparée à une valeur de référence. Si Va diminue cela signifie que le couple augmente. Il est sera de même si Vc est comparée une valeur de référence.

Selon d'autres procédures l'ULT compare les tensions Va et Vp, soit en calculant le déphasage de ces tensions, soit la différence d'amplitude Vp-Va, soit encore le quotient des amplitudes Vp/Va.

Il est possible de connaître l'évolution, dans le temps, de l'une ou l'autre de ces mesures ou calculs en calculant sa dérivée dans le temps, ce qui permet à l'ULT de s'affranchir de dérives naturelles, principalement des composants et de l'alimentation et des dérives thermiques du moteur.

Comme ceci a été mentionné plus haut, le pilotage en fréquence de la source d'alimentation peut aussi se faire par l'analyse de la variation du déphasage entre tension et courant ou entre courants.

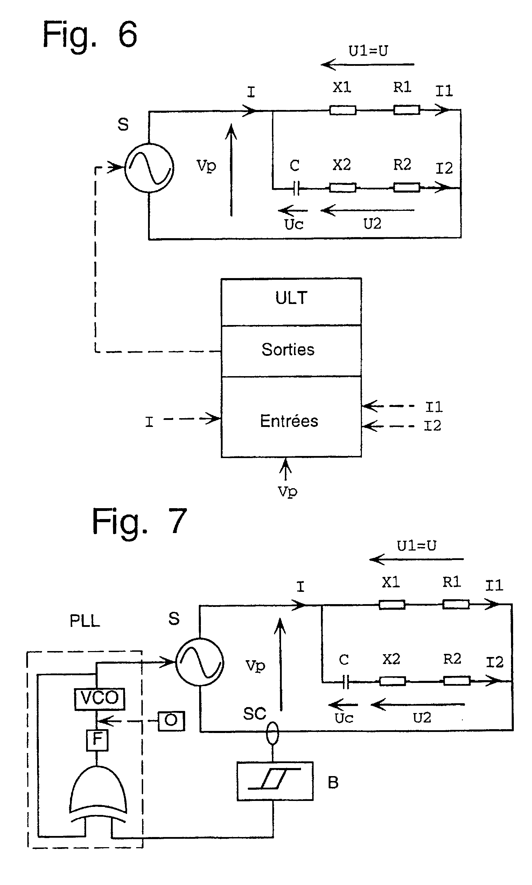

A la figure 6 est représenté à nouveau le schéma équivalent du moteur selon la figure 4 et une ULT pour le pilotage de la source d'alimentation S.

Selon un deuxième mode d'exécution, la tension de source Vp et le courant total I sont appliqués aux entrées de l'ULT et l'ULT est programmée de manière à ajuster la fréquence de la source S de manière à ce que la tension Vp et le courant I soient sensiblement en phase. Sur le diagramme vectoriel de la figure 5, ceci correspond à l'orientation du vecteur U.

Selon un troisième mode d'exécution, également illustré par la figure 6, ce sont le courant I1 dans l'élément piézo-électrique P1 et le courant I2 dans l'élément piézo-électrique P2 qui sont appliqués aux entrées de l'ULT, cette ULT étant programmée de manière à ajuster la fréquence de la source S de manière à ce que les courants I1 et I2 soient sensiblement en quadrature de phase comme c'est le cas dans le diagramme vectoriel de la figure 5.

Un quatrième mode d'exécution est représenté à la figure 7, dans laquelle le moteur est à nouveau représenté par son schéma équivalent. Dans ce mode d'exécution, l'ULT est remplacée par une boucle à verrouillage de phase PLL. On a déjà proposé d'utiliser des boucles à verrouillage de phases pour piloter en fréquence un moteur piézo-électrique. Ces applications sont décrites dans les brevets US 4 794 294 et 4 833 358. On reconnaît dans la boucle à verrouillage de phase PLL une porte OU exclusive, un filtre passe-bas F et un oscillateur commandé en tension VCO. A la porte OU exclusive sont appliqués, d'une part, un signal représentatif du courant total I obtenu au moyen d'une sonde de courant SC et d'un circuit B de filtrage et mise en forme (bascule de Schmitt) du courant mesuré par la sonde et, d'autre part, une tension correspondant à la tension de la source Vp. La boucle à verrouillage de phase agit de telle sorte que la tension Vp et le courant total I soient sensiblement en phase comme dans le deuxième mode d'exécution.

Ce dernier mode d'exécution présente des avantages sur les modes d'exécution précédents : l'électronique est plus simple que celle d'une ULT, un circuit intégré de boucle à verrouillage de phase est courant et on obtient une isolation galvanique entre le moteur et l'électronique grâce à la sonde de courant et au secondaire du transformateur de la source d'alimentation S dans le cas où cette source S est une alimentation à découpage de courant.

Ce dernier mode d'exécution peut être amélioré par l'ajout d'un élément de compensation du déphasage parasite introduit par le filtre et le circuit de mise en forme du courant B.

Dans tous les modes d'exécution, il peut être judicieux de décaler volontairement la fréquence de la source d'alimentation par rapport à la fréquence de résonance du moteur piézo-électrique de manière à améliorer la stabilité de ce moteur. Ce décalage peut être assuré par l'ULT, respectivement par l'élément de compensation O dans le cas de la boucle à verrouillage de phase.

## Revendications

**1.** Circuit d'alimentation d'un moteur piézo-électrique à onde progressive comprenant au moins un rotor entraîné, par frottement, par au moins un stator excité par au moins deux éléments piézo-électriques reliés respectivement, d'une part, au stator et, d'autre part, à deux électrodes alimentées respectivement par deux tensions alternatives (Vp, Va) de même amplitude et déphasées d'environ 90° au moyen d'une source unique d'alimentation alternative et d'un moyen destiné à générer les deux tensions déphasées,

**caractérisé en ce que** le moyen destiné à générer les deux tensions déphasées est constitué d'un condensateur (C) en série avec l'une desdites électrodes et dont la valeur est choisie de telle sorte que, pour une fréquence donnée de la tension de la source, l'amplitude de la tension entre le stator et l'électrode de l'élément piézo-électrique en série avec le condensateur soit sensiblement égale à l'amplitude de la tension de la source et que le déphasage des courants dans chaque élément piézo-électrique soit voisin de 90°.

2. Circuit d'alimentation selon la revendication 1, **caractérisé en ce que**, dans une première phase de fonctionnement du moteur, la source d'alimentation est pilotée en fréquence par une ULT aux entrées de laquelle sont appliquées la tension de la source (Vp) et la tension (Va) entre le stator et l'électrode de l'élément piézo-électrique reliée au condensateur et que l'ULT est programmée de manière ajuster la fréquence de la source de manière à ce que les amplitudes desdites tensions (Vp, Va) soient égales.

3. Circuit d'alimentation selon la revendication 1, **caractérisé en ce que** la source d'alimentation est pilotée par une ULT aux entrées de laquelle est appliquée la tension (Va) entre le stator et l'électrode de l'élément piézo-électrique en série avec le condensateur.

4. Circuit d'alimentation selon la revendication 3, **caractérisé en ce qu'**aux entrées de l'ULT est également appliquée la tension de la source et/ou la tension aux bornes du condensateur.

5. Circuit d'alimentation selon la revendication 4, **caractérisé en ce que** l'ULT est programmée pour comparer la tension entre le stator et l'électrode de l'élément piézo-électrique en série avec le condensateur à une valeur de référence.

6. Circuit d'alimentation selon la revendication 4, **caractérisé en ce que** l'ULT est programmée pour comparer la tension entre le stator et l'électrode de l'élément piézo-électrique en série avec le condensateur à la tension de la source pour en calculer le déphasage ou la différence d'amplitude ou le quotient des amplitudes.

7. Circuit d'alimentation selon l'une des revendications 3 à 5, **caractérisé en ce que** l'ULT est programmée pour calculer la dérivée dans le temps des tensions qui sont appliquées à ses entrées, respectivement de la différence qu'elles présentent avec une valeur de référence.

8. Circuit d'alimentation selon la revendication 6, **caractérisé en ce que** l'ULT est programmée pour calculer la dérivée dans le temps dudit déphasage ou de ladite différence d'amplitude ou dudit quotient des amplitudes.

9. Circuit d'alimentation selon la revendication 1, **caractérisé en ce que** la source d'alimentation (S) est pilotée en fréquence par une ULT aux entrées de laquelle sont appliqués la tension de source (Vp) et le courant total (I), l'ULT étant programmée de manière à ajuster la fréquence de la source (S) de manière à ce que la tension de source (Vp) et le courant total (I) soient sensiblement en phase.

10. Circuit d'alimentation selon la revendication 1, **caractérisé en ce que** la source d'alimentation (S) est pilotée en fréquence par une ULT aux entrées de laquelle sont appliqués les courants (I1, I2) dans les deux électrodes, l'ULT étant programmée de manière à ajuster la fréquence de la source (S) de manière à ce que les courants (I1, I2) soient sensiblement en quadrature.

11. Circuit d'alimentation selon la revendication 1, **caractérisé en ce que** la source d'alimentation (S) est pilotée en fréquence par une boucle à verrouillage de phase (PLL) telle que la tension de source (Vp) et le courant total (I) soient sensiblement en phase.

12. Circuit d'alimentation selon l'une des revendications 1 à 11, **caractérisée ce qu'**il comprend un moyen additionnel (O; ULT) de décalage volontaire de la fréquence décalant légèrement la fréquence de la source relativement à la fréquence de résonance du moteur.

**Patentansprüche**

1. Speiseschaltung für einen piezoelektrischen Wanderwellenmotor mit wenigstens einem Läufer, der durch Reibung von wenigstens einem Ständer mitgenommen wird, welcher von wenigstens zwei piezoelektrischen Elementen erregt wird, wobei diese piezoelektrischen Elemente jeweils einerseits mit dem Ständer und andererseits mit zwei Elektroden verbunden sind, die jeweils durch zwei Wechselspannungen (Vp, Va) gespeist werden, welche dieselbe Amplitude haben und um etwa 180° phasenverschoben sind, und zwar mit Hilfe einer einzigen Wechselspannungsquelle sowie eines Mittels zum Erzeugen der beiden phasenverschobenen Spannungen,
**dadurch gekennzeichnet, dass** das Mittel zum Erzeugen der beiden phasenverschobenen Spannungen aus einem in Reihe mit den erwähnten Elektroden liegenden Kondensator besteht, dessen Wert derart gewählt ist, dass für eine gegebene Frequenz der Quellenspannung die Amplitude der Spannung zwischen dem Ständer und der mit dem Kondensator in Reihe geschalteten Elektrode des piezoelektrischen Elements etwa gleich der Amplitude der Quellenspannung ist, und dass die Phasenverschiebung der Ströme in jedem piezoelektrischen Element nahe bei 90° liegt.

2. Speiseschaltung nach Anspruch 1, **dadurch gekennzeichnet, dass** in einer ersten Phase des Motorbetriebs die Speisequelle durch eine ULT (logische Verarbeitungseinheit) frequenzgesteuert wird, an deren Eingänge die Quellenspannung (Vp) und die Spannung (Va) zwischen dem Ständer und der an den Kondensator angeschlossenen Elektrode des piezoelektrischen Element angelegt sind, und dass die ULT dazu programmiert ist, um die Frequenz der Quelle derart zu justieren, dass die Amplituden der erwähnten Spannungen (Vp, Va) gleich sind.

3. Speiseschaltung nach Anspruch 1, **dadurch gekennzeichnet, dass** die Speisequelle durch eine ULT gesteuert wird, an deren Eingängen die Spannung (Va) zwischen dem Ständer und der in Reihe mit dem Kondensator geschalteten Elektrode des piezoelektrischen Elements liegt.

4. Speiseschaltung nach Anspruch 3, **dadurch gekennzeichnet, dass** an den Eingängen der ULT auch die Quellenspannung und/oder die Spannung an den Kondensatorklemmen liegt.

5. Speiseschaltung nach Anspruch 4, **dadurch gekennzeichnet, dass** die ULT programmiert ist, um die Spannung zwischen dem Ständer und der in Reihe mit dem Kondensator liegenden Elektrode des piezoelektrischen Elements mit einem Bezugswert zu vergleichen.

6. Speiseschaltung nach Anspruch 4, **dadurch gekennzeichnet, dass** die ULT dazu programmiert ist, um die Spannung zwischen dem Ständer und der mit dem Kondensator in Reihe liegenden Elektrode des piezoelektrischen Elements mit der Quellenspannung zu vergleichen, um die Phasenverschiebung oder die Amplitudendifferenz oder den Quotienten der Amplituden zu berechnen.

7. Speiseschaltung nach einem der Ansprüche 3 bis 5, **dadurch gekennzeichnet, dass** die ULT dazu programmiert ist, um die zeitliche Ableitung der an ihren Eingängen liegenden Spannungen bzw. der Differenz zum Bezugswert zu berechnen.

8. Speiseschaltung nach Anspruch 6, **dadurch gekennzeichnet**, das die ULT dazu programmiert ist, um die zeitliche Ableitung der erwähnten Phasenverschiebung oder der erwähnten Amplitudendifferenz oder des erwähnten Amplitudenquotienten zu berechnen.

9. Speiseschaltung nach Anspruch 1, **dadurch gekennzeichnet, dass** die Speisequelle (S) durch eine ULT frequenzgesteuert wird, an deren Eingänge die Quellenspannung (Vp) und der Gesamtstrom (I) angelegt sind, wobei die ULT dazu programmiert ist, um die Frequenz der Quelle (S) so zu justieren, dass die Quellenspannung (Vp) und der Gesamtstrom (I) im wesentlichen in Phase sind.

10. Speiseschaltung nach Anspruch 1, **dadurch gekennzeichnet, dass** die Speisequelle (S) durch eine ULT frequenzgesteuert wird, an deren Eingänge die Ströme (I1, I2) in den beiden Elektroden angelegt sind, wobei die ULT dazu programmiert ist, um die Frequenz der Quelle (S) so zu justieren, dass die Ströme (I1, I2) im wesentlichen um 90 phasenverschoben sind.

11. Speiseschaltung nach Anspruch 1, **dadurch gekennzeichnet, dass** die Speisequelle (S) durch eine Phasenverriegelungsschleife (PLL) so frequenzgesteuert wird, dass die Quellenspannung (Vp) und der Gesamtstrom (I) im wesentlichen in Phase sind.

12. Speiseschaltung nach einem der Ansprüche 1 bis 11, **dadurch gekennzeichnet, dass** sie ein zusätzliches Mittel (0; ULT) zur freiwilligen Frequenzverschiebung aufweist, wobei die Frequenz der Quelle relativ zur Resonanzfrequenz des Motors leicht verschoben wird.

**Claims**

1. Supply circuit for a traveling-wave piezo-electric motor comprising at least one rotor driven, by friction, by at least one stator energized by at least two piezo-electric elements linked respectively, on the one hand, to the stator and, on the other hand, to two electrodes supplied respectively with two alternating voltages (Vp, Va) of like amplitude and phase-shifted by around 90° by means of a single alternating supply source and of a means intended for generating the two phase-shifted voltages, **characterized in that** the means intended for generating the two phase-shifted voltages consists of a capacitor (C) in series with one of said electrodes and whose value is chosen so that, for a given frequency of the voltage of the source, the amplitude of the voltage between the stator and the electrode of the piezo-electric element in series with the capacitor is substantially equal to the amplitude of the voltage of the source and that the phase shift of the currents in each piezo-electric element is about 90°.

**2.** Supply circuit as claimed in claim 1, **characterized in that** in a first phase of operation of the motor, the supply source is frequency-controlled by a PLU to the inputs of which are applied the voltage of the source (Vp) and the voltage (Va) between the stator and that electrode of the piezo-electric element which is linked to the capacitor and **in that** the PLU is programmed in such a way as to adjust the frequency of the source in such a way that the amplitudes of said voltages (Vp, Va) are equal.

**3.** Supply circuit as claimed in claim 1, **characterized in that** the supply source is controlled by a PLU to the inputs of which is applied the voltage (Va) between the stator and the electrode of the piezo-electric element in series with the capacitor.

**4.** Supply circuit as claimed in claim 3, **characterized in that** to the inputs of the PLU is also applied the voltage of the source and/or the voltage at the terminals of the capacitor.

**5.** Supply circuit as claimed in claim 4, **characterized in that** the PLU is programmed so as to compare the voltage between the stator and the electrode of the piezo-electric element in series with the capacitor with a reference value.

**6.** Supply circuit as claimed in claim 4, **characterized in that** the PLU is programmed so as to compare the voltage between the stator and the electrode of the piezo-electric element in series with the capacitor with the voltage of the source so as to calculate therefrom the phase shift or the amplitude difference or the quotient of the amplitudes.

**7.** Supply circuit as claimed in one of claims 3 to 5, **characterized in that** the PLU is programmed to calculate the time derivative of the voltages which are applied to its inputs, respectively of the difference which they exhibit with a reference value.

**8.** Supply circuit as claimed in claim 6, **characterized in that** the PLU is programmed to calculate the time derivative of said phase shift or of said amplitude difference or of said quotient of the amplitudes.

**9.** Supply circuit as claimed in claim 1, **characterized in that** the supply source (S) is frequency-controlled by a PLU to the inputs of which are applied the source voltage (Vp) and the total current (I), the PLU being programmed in such a way as to adjust the frequency of the source (S) in such a way that the source voltage (Vp) and the total current (I) are substantially in phase.

**10.** Supply circuit as claimed in claim 1, **characterized in that** the supply source (S) is frequency-controlled by a PLU to the inputs of which are applied the currents (I1, I2) in the two electrodes, the PLU being programmed in such a way as to adjust the frequency of the source (S) in such a way that the currents (I1, I2) are substantially in quadrature.

**11.** Supply circuit as claimed in claim 1, **characterized in that** the supply source (S) is frequency-controlled by a phase-locked loop (PLL) such that the source voltage (Vp) and the total current (I) are substantially in phase.

**12.** Supply circuit as claimed in one of claims 1 to 11, **characterized in that** it comprises an additional means (O; PLU) of deliberate shifting of the frequency which slightly shifts the frequency of the source in relation to the resonant frequency of the motor.

EP 0 938 142 B1

# Fig 1

8

Fig. 2

Fig. 3

Fig. 4

Fig. 5

# Fig. 6

# Fig. 7